(19)

Europäisches
Patentamt

European
Patent Office

Office européen
des brevets

(11) **EP 2 982 950 A1**

(12) **EUROPEAN PATENT APPLICATION**

(43) Date of publication:
**10.02.2016 Bulletin 2016/06**

(51) Int Cl.:
*G01J 4/00* *(2006.01)*  *B82Y 25/00* *(2011.01)*

(21) Application number: **14180354.4**

(22) Date of filing: **08.08.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **CENTRE NATIONAL DE
LA RECHERCHE SCIENTIFIQUE -CNRS-
75794 Paris Cedex 16 (FR)**
• **Université de Strasbourg
67081 Strasbourg Cedex (FR)**

(72) Inventors:
• **Bowen, Martin
77694 Kehl (DE)**
• **Halisdemir, Ufuk
67000 STRASBOURG (FR)**
• **Schleicher, Filip
67000 STRASBOURG (FR)**
• **Boukari, Samy
68180 Horbourg (FR)**
• **Beaurepaire, Eric
67550 Vendenheim (FR)**

(74) Representative: **Cabinet Camus Lebkiri
25, Rue de Maubeuge
75009 Paris (FR)**

(54) **Process of detection of light and associated device**

(57)    According to an aspect of the invention, it is provided a process of detection of light comprising:
- a step of flowing an electric current through at least a first dielectric junction, said first dielectric junction comprising at least a first metallic layer extending along a first reference plane and a second metallic layer extending parallel to said first reference plane, said first and second metallic layers being separated from each other by a dielectric layer ensuring non-ohmic conduction between said first and second metallic layers;
- a step of measuring the electric resistance of the first dielectric junction;
- a step of determining the presence or the absence of light by using the measured electric resistance of the first dielectric junction.

    According to another aspect of the invention, it is provided a process of characterization of the degree to which detected light is polarized along a first spatial direction and/or along a second spatial direction and/or along a third spatial direction, using a device at the nanometre scale. This enables the detection of the orientation of the incoming light.

EP 2 982 950 A1

Description

TECHNICAL FIELD

An aspect of the present invention relates to the technical field of light detection. Another aspect of the present invention relates to the technical field of light characterization, and in particular to the technical field of the characterization of the polarization of light and its trajectory.

BACKGROUND OF THE INVENTION

In the technical field of light detection, photodiodes are known. A photodiode is a semiconductor device that converts incident light into an electric current. A photodiode is typically a p-n junction. A photodiode typically has dimensions of the order of 10 $\mu$m. There is a need to downsize light sensors.
In the technical field of light polarization characterization, polarizers are known. A polarizer is an optical filter that passes light of a specific polarization and blocks waves of other polarizations: it can convert a beam of light of undefined or mixed polarization into a beam with well-defined polarization.
A polarizing film may be deposited on a light sensor such as a photodiode, however typically implying a decrease in sensitivity for the light sensor and preventing the light sensor from being downsized.
A conventional camera captures the projection onto a 2-dimensional plane of a 3-dimensional light-field. The resulting picture is in focus within a given plane but information to recreate a focus within an alternate plane is lost. A light-field camera sacrifices resolution in order, thanks to an array of lenses, to capture the orientation of the impinging light by comparing neighbouring regions. The ensuing dataset enables the post-facto redefinition of the focal plane. Due to their implementation, light-field cameras presently suffer from low resolutions.
At present, no arrayed solution exists to characterize in multiple dimensions the spatial orientation of the linear polarization of light.

SUMMARY OF THE INVENTION

An objective of the invention is to enable the detection of light using a device at the nanometre scale. Another objective of the invention is to enable the detection of light using a device that can be integrated with a high spatial density. Another objective of the invention is to enable the characterization of the degree to which the detected light is polarized along a first spatial direction, using a device at the nanometre scale. Another objective of the invention is to enable the characterization of the degree to which the detected light is polarized along a first spatial direction and along a second spatial direction, using a device at the nanometre scale. Another objective of the invention is to enable the characterization of the degree to which the detected light is polarized along a first spatial direction, along a second spatial direction and along a third spatial direction, using a device at the nanometre scale. Another objective of the invention is to offer an information on the trajectory that light have taken, using a device at the nanometre scale. Another objective of the invention is to enable the hardware detection of glare within a picture, and to provide a new hardware implementation for a light-field camera.
To this end, according to an aspect of the invention, it is provided a process of detection of light comprising:

- a step of flowing an electric current through at least a first dielectric junction, said first dielectric junction comprising at least a first metallic layer extending along a first reference plane and a second metallic layer extending parallel to said first reference plane, said first and second metallic layers being separated from each other by a dielectric layer ensuring non-ohmic conduction between said first and second metallic layers;
- a step of measuring the electric resistance of the first dielectric junction;
- a step of determining the presence or the absence of light by using the measured electric resistance of the first dielectric junction.

Thanks to the invention, the presence or the absence of light may be detected using a dielectric junction at the nanometre scale. The process of detection of light according to an aspect of the invention may further allow quantifying detected light. The process of detection of light according to an aspect of the invention may further allow characterizing the degree to which the detected light is polarized along a first spatial direction. The process of detection of light according to an aspect of the invention may further allow characterizing the degree to which the detected light is polarized along a first spatial direction and along a second spatial direction. The process of detection of light according to an aspect of the invention may further allow characterizing the degree to which the detected light is polarized along a first spatial direction, along a second spatial direction and along a third spatial direction.
Apart from the characteristics mentioned above in the previous paragraph, the process of detection of light according to an aspect of the invention may have one or several complementary characteristics among the following characteristics considered individually or in any technically possible combinations:

- The dielectric layer has a thickness between 0.5 nm and 1000 nm, said thickness being measured along a direction perpendicular to the first reference plane. The dielectric layer preferentially has a thickness between 0.5 nm and 100 nm, said thickness being measured along a direction perpendicular to the first reference plane.

- The dielectric layer has a thickness that is less than or equal to 4 nm, said thickness being measured along a direction perpendicular to the first reference plane.

- The dielectric layer has a thickness between 0.6 and 3 nm, said thickness being measured along a direction perpendicular to the first reference plane.

- The dielectric junction comprises:

    o a substrate extending along a second reference plane, the second reference plane being substantially parallel to the first reference plane;
    o a first electrode extending along the substrate;
    o the first metallic layer extending along the first electrode;
    o the dielectric layer extending along the first metallic layer;
    o the second metallic layer extending along the dielectric layer;
    o a second electrode extending along the second metallic layer.

- Alternatively, the dielectric junction comprises:

    o a substrate extending along a second reference plane, the second reference plane being substantially perpendicular to the first reference plane;
    o a first electrode extending along a plane that is substantially perpendicular to the second reference plane and substantially parallel to the first reference plane,
    o the first metallic layer extending along the first electrode,
    o the dielectric layer extending along the first metallic layer,
    o the second metallic layer extending along the dielectric layer,
    o a second electrode extending along the second metallic layer.

- The dielectric layer is made of magnesium oxide MgO. Alternatively, the dielectric layer may be made of titanium dioxide $TiO_2$, strontium titanate $SrTiO_3$ or aluminium oxide $Al_2O_3$. The dielectric layer is beneficially made of a textured dielectric, such as for example a textured oxide. The dielectric layer is preferentially made of an epitaxial dielectric, such as for example an epitaxial oxide. In materials science, the texture of a polycrystalline sample is the distribution of crystallographic orientations of said polycrystalline sample. If the crystallographic orientations are not random but have some preferred orientation along at least one axis, then the sample has a texture. Thanks to this texture or epitaxy, a precise set of atomic orbitals is positioned parallel or perpendicular to the flow of current along a given crystallographic direction. In turn, polarized light shall promote photoelectrons within orbitals that are spatially pointing along the direction of polarization. The asymmetric impact of photoelectrons on current depending on the orbital that they reside in increases the sensitivity of the ensuing device to the degree of polarization of light that is impinging on it.

- A plurality of dielectric junctions is used, said plurality of dielectric junctions comprising at least the first dielectric junction and a reference device for quantifying detected light further comprising an optically opaque cover, the process further comprising:

    o a step of flowing an electric current through said first dielectric junction and through said reference device for quantifying detected light;
    o a step of measuring the electric resistance of said first dielectric junction and of said reference device for quantifying detected light;
    o a step of quantifying the presence or the absence of light around said first dielectric junction by comparing the measured electric resistance of the first dielectric junction with the measured electric resistance of the reference device for quantifying detected light.

- A plurality of dielectric junctions is used, said plurality of dielectric junctions comprising at least the first dielectric junction and a reference device for characterizing detected light further comprising a light depolarizer, the process comprising:

  o a step of flowing an electric current through said first dielectric junction and through said third reference device for characterizing detected light;
  o a step of measuring the electric resistance of said first dielectric junction and of said reference device for characterizing detected light;
  o a step of comparing the measured electric resistance of the first electric junction with the measured electric resistance of the reference device for characterizing detected light, in order to characterize the degree to which light around the first dielectric junction is polarized along a first spatial direction.

- The plurality of dielectric junctions further comprises a reference device for quantifying detected light comprising an optically opaque cover, the process comprising:

  o a step of flowing an electric current through said first dielectric junction, through said reference device for quantifying detected light and through said reference device for characterizing detected light;
  o a step of measuring the electric resistance of the first dielectric junction, of the reference device for quantifying detected light and of the reference device for characterizing detected light;
  o a step of comparing the measured electric resistance of the first dielectric junction with the measured electric resistance of the reference device for quantifying detected light in order to quantify the presence or the absence of light around the first dielectric junction, and
  o a step of comparing the measured electric resistance of the first dielectric junction with the measured electric resistance of the reference device for characterizing detected light in order to characterize the degree to which light around the first dielectric junction is polarized along a first spatial direction.

- The plurality of dielectric junctions further comprises a second dielectric junction, the process comprising:

  o a step of flowing an electric current at least through the first dielectric junction, through the second dielectric junction, through the reference device for quantifying detected light and through the reference device for characterizing detected light;
  o a step of measuring the electric resistance of the first dielectric junction, of the second dielectric junction, of the reference device for quantifying detected light and of the reference device for characterizing detected light;
  o a step of comparing the measured electric resistance of the first dielectric junction with the measured electric resistance of the reference device for quantifying detected light in order to quantify the presence or the absence of light around the first dielectric junction, and/or of comparing the measured electric resistance of the second dielectric junction with the measured electric resistance of the reference device for quantifying detected light in order to quantify the presence or the absence of light around the second dielectric junction;
  o a step of comparing the measured electric resistance of the first dielectric junction with the measured electric resistance of the reference device for characterizing detected light in order to characterize the degree to which light around the first dielectric junction is polarized along a first spatial direction;
  o a step of comparing the measured electric resistance of the second dielectric junction with the measured electric resistance of the reference device for characterizing detected light in order to characterize the degree to which light around the second dielectric junction is polarized along a second spatial direction.

- The plurality of dielectric junctions further comprises a third dielectric junction, a second reference device for quantifying detected light and a second reference device for characterizing detected light, the process comprising:

  o a step of flowing an electric current at least through the first dielectric junction, through the second dielectric junction, through the third dielectric junction, through the reference device for quantifying detected light, through the second reference device for quantifying detected light, through the reference device for characterizing detected light and through the second reference device for characterizing detected light;
  o a step of measuring the electric resistance of the first dielectric junction, of the second dielectric junction, of the third dielectric junction, of the reference device for quantifying detected light, of the second reference device for quantifying detected light, of the reference device for characterizing detected light and of the second reference device for characterizing detected light;
  o a step of comparing the measured electric resistance of the first dielectric junction with the measured electric resistance of the reference device for quantifying detected light in order to quantify the presence or the absence of light around the first dielectric junction, and/or of comparing the measured electric resistance of the second dielectric junction with the measured electric resistance of the reference device for quantifying detected light in order to quantify the presence or the absence of light around the second dielectric junction, and/or of comparing the measured electric resistance of the third dielectric junction with the measured electric resistance of the second reference device for quantifying detected light in order to quantify the presence or the absence of light around the third dielectric junction;

o a step of comparing the measured electric resistance of the first dielectric junction with the measured electric resistance of the reference device for characterizing detected light in order to characterize the degree to which light around the first dielectric junction is polarized along a first spatial direction;

o a step of comparing the measured electric resistance of the second dielectric junction with the measured electric resistance of the reference device for characterizing detected light in order to characterize the degree to which light around the second dielectric junction is polarized along a second spatial direction;

o a step of comparing the measured electric resistance of the third dielectric junction with the measured electric resistance of the second reference device for characterizing detected light in order to characterize the degree to which light around the third dielectric junction is polarized along a third spatial direction.

- A three-dimensional polarization vector of light is obtained, the process comprising a step of determining the propagation direction of light.

Present implementations of a light-field camera utilize an array of large pixels, preceded by a microlens, in order to gather information on the propagation direction of light. An aspect of the present invention also uses a plurality of devices to do so, but each device may advantageously be shrunk to the nanoscale while maintaining sufficient sensitivity. This circumvents a major drawback of present implementations of a light-field camera. Furthermore, an aspect of the invention advantageously enables the detection of the polarization vector of light in an arrayed fashion. This is useful for scientific applications, but also consumer applications such as the hardware detection of glare, which is essentially polarized light. By combining sensors without and with a depolarizing cover, an image with glare may be optimally processed to reduce this glare without affecting the quality of the image. Other features and advantages of the invention will become apparent on examining the detailed specifications hereafter and the appended drawings.

## BRIEF DESCRIPTION OF THE FIGURES

- Figure 1 schematically illustrates a stack according to an embodiment of the invention.
- Figure 2a schematically illustrates a normal geometry of a device for detecting light according to an embodiment of the invention.
- Figure 2b schematically illustrates a lateral geometry of a device for detecting light according to an embodiment of the invention.
- Figure 3 schematically illustrates a diagram of the steps of a process of detection of light according to an embodiment of the invention.
- Figure 4a schematically illustrates a normal reference device for quantifying detected light according to an embodiment of the invention.
- Figure 4b schematically illustrates a lateral reference device for quantifying detected light according to an embodiment of the invention.
- Figure 4c schematically illustrates a first device allowing quantifying the presence or the absence of light according to an embodiment of the invention.
- Figure 4d schematically illustrates a second device allowing quantifying the presence or the absence of light according to an embodiment of the invention.
- Figure 5 schematically illustrates a diagram of the steps of a process of quantification of the presence or the absence of light according to an embodiment of the invention.
- Figure 6a schematically illustrates a normal reference device for characterizing detected light along a first spatial direction, according to an embodiment of the invention.
- Figure 6b schematically illustrates a lateral reference device for characterizing detected light along a first spatial direction, according to an embodiment of the invention.
- Figure 6c schematically illustrates a first device allowing quantifying the presence or the absence of light and characterizing light along a first spatial direction, according to an embodiment of the invention.
- Figure 6d schematically illustrates a second device allowing quantifying the presence or the absence of light and characterizing light along a first spatial direction, according to an embodiment of the invention.

- Figure 7a schematically illustrates a diagram of the steps of a process of characterization of light along a first spatial direction, according to an embodiment of the invention.
- Figure 7b schematically illustrates a diagram of the steps of a process of quantification of the presence or the absence of light and of characterization of light along a first spatial direction, according to an embodiment of the invention.
- Figure 8a schematically illustrates a first device allowing quantifying the presence or the absence of light and characterizing light along a first spatial direction and along a second spatial direction, according to an embodiment of the invention.
- Figure 8b schematically illustrates a second device allowing quantifying the presence or the absence of light and characterizing light along a first spatial direction and along a second spatial direction, according to an embodiment of the invention.
- Figure 8c schematically illustrates a third device allowing quantifying the presence or the absence of light and characterizing light along a first spatial direction and along a second spatial direction, according to an embodiment of the invention.
- Figure 9 schematically illustrates a diagram of the steps of a process of quantification of the presence or the absence of light and of characterization of light along a first spatial direction and along a second spatial direction, according to an embodiment of the invention.
- Figure 10 schematically illustrates a device allowing quantifying the presence or the absence of light and characterizing light along a first spatial direction, along a second spatial direction and along a third spatial direction, according to an embodiment of the invention.
- Figure 11 schematically illustrates a diagram of the steps of a process of quantification of the presence or the absence of light and of characterization of light along a first spatial direction, along a second spatial direction and along a third spatial direction, according to an embodiment of the invention.

## DETAILED DESCRIPTION OF THE PREFERRED EMBODIMENT

Some embodiments of apparatus and methods in accordance with embodiments of the present invention are now described, by way of example only, and with reference to the accompanying drawings. The description is to be regarded as illustrative in nature and not as restricted.

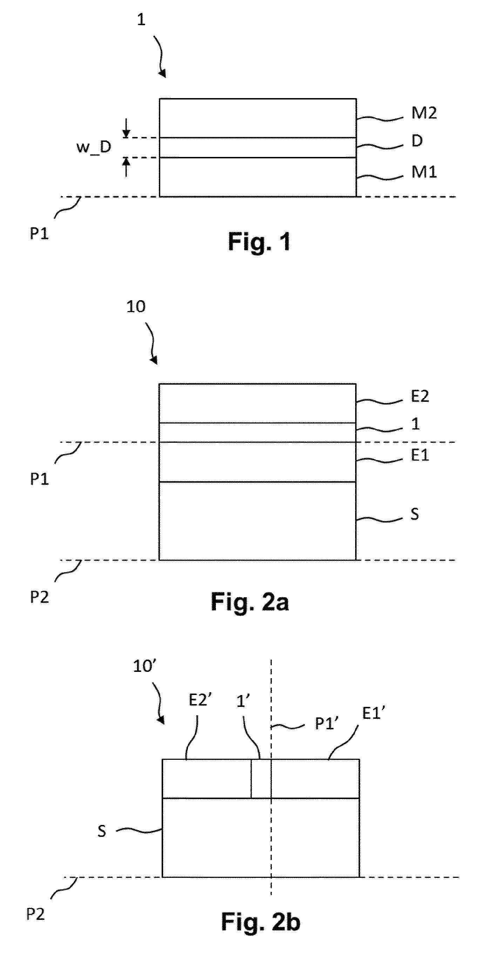

Figure 1 schematically illustrates a stack 1 according to an embodiment of the invention. The stack 1 comprises:

- a first metallic layer M1 extending along a first reference plane P1;
- a dielectric layer D extending along the first metallic layer M1;
- a second metallic layer M2 extending along the dielectric layer D.

The first and second metallic layers M1 and M2 are in contact respectively with one of the faces of the dielectric layer D, either side of said dielectric layer D. The dielectric layer D ensures non-ohmic conduction between said first and second metallic layers M1 and M2.
In a particular embodiment of the invention, the first metallic layer M1 may be a first magnetic layer, the second metallic layer M2 may be a second magnetic layer and the dielectric layer D may be a non-magnetic layer ensuring the magnetic decoupling of the first and second magnetic layers.
In a first particular example:

- the first metallic layer M1 and the second metallic layer M2 may be made of tantalum Ta, and
- the dielectric layer D may be made of magnesium oxide MgO.

In a second particular example:

- the first metallic layer M1 and the second metallic layer M2 may be made of Iron Cobalt Boron FeCoB, and
- the dielectric layer D may be made of magnesium oxide MgO.

The dielectric layer D has a thickness $w\_D$ that is measured along a direction perpendicular to the first reference plane P1. Said thickness $w\_D$ may typically be comprised between 1 nanometre and 100 nanometres.
Said thickness $w\_D$ may beneficially be less than or equal to 4 nanometres, and said thickness $w\_D$ may in particular beneficially be comprised between 2 nanometres and 3 nanometres, in order to promote a nominally elastic regime of tunnelling transport. In such a nominally elastic regime of tunnelling transport, electrons may tunnel directly from one interface metallic layer/dielectric layer to another interface metallic layer/dielectric layer.
Alternatively, said thickness $w\_D$ may be greater than 4 nanometres. Said thickness $w\_D$ may in particular be greater than 10 nanometres. In that case, the transport of electrons across the dielectric layer is interpreted in terms of hopping transport across the dielectric layer D. Within said thickness range indeed, if localized states within the tunnel barrier's band gap arise due to the presence of structural defects, several tunnelling steps will take place as the electron crosses the barrier by hopping onto defect sites.

The dielectric layer D may for example comprise a material chosen among the followings:

- a magnesium oxide MgO material;
- a strontium titanate $SrTiO_3$ material;
- a tantalum pentoxide $Ta_2O_5$ material;
- an aluminium oxide $Al_2O_5$ material;
- a titanium dioxide $TiO_2$ material;
- a lanthanum aluminate $LaAlO_3$ material;
- a zirconium oxy-nitride material.

The list hereinabove is non-exhaustive. The dielectric layer D shall beneficially be textured or epitaxial.

Figure 2a schematically illustrates a device 10 for detecting light according to a first embodiment of the invention, said device 10 having a first geometry. The device 10 having the first geometry is also referred to as "normal dielectric junction". The device 10 comprises:

- a substrate S extending along a second reference plane P2;
- a first electrode E1 extending along the substrate S;
- the first metallic layer M1 of the stack 1 extending along the first electrode E1;
- the dielectric layer D of the stack 1 extending along the metallic layer M1;
- the second metallic layer M2 of the stack 1 extending along the dielectric layer D;
- a second electrode E2 extending along the second metallic layer M2 of the stack 1.

The first geometry is such that the first reference plane P1 and the second reference place P2 are substantially parallel. In other words, in a normal dielectric junction 10, current that flows through the stack 1 between the first electrode E1 and the second electrode E2 is normal to the substrate S.

A normal dielectric junction 10 may for example comprise:

- a substrate S made of glass;
- a first electrode E1 comprising a first sub-layer made of tantalum Ta having a thickness of 5 nanometres, a second sub-layer made of cobalt Co having a thickness of 10 nanometres and a third sub-layer made of iridium manganese IrMn having a thickness of 7.5 nanometres;
- a first metallic layer M1 made of FeCoB and having a thickness of about 4 nanometres;
- a dielectric layer D made of MgO and having a thickness of about 2.5 nanometres;
- a second metallic layer M2 made of FeCoB and having a thickness of about 2.5 nanometres;
- a second electrode E2 comprising a first sub-layer made of tantalum Ta having a thickness of 1 nanometre and a second sub-layer made of platinum Pt having a thickness of 1 nanometre.

In a normal dielectric junction 10, the second electrode E2 is thin enough so as to allow light impinging normal to the substrate S to reach the stack 1. A non-exhaustive table of values of the operating temperature and of the bias voltage to apply to the FeCoB/MgO/FeCoB dielectric junction described above in order to optimally detect light of a given wavelength range is presented.

| Bias voltage (V) | Temperature (K) | Wavelength (nm) |
|---|---|---|
| ± 1.2 | 30-80 | 375-500 |
| ± 0.8 | 80-250 | 575-725 |

Said FeCoB/MgO/FeCoB dielectric junction may nevertheless exhibit sensitivity to the given wavelength ranges outside of the given ranges of parameters, and notably at and beyond room temperature. This table is non-exhaustive in terms of available wavelength ranges. For instance, said FeCoB/MgO/CoFeB dielectric junction may exhibit sensitivity within 375-500 nanometres, with a 10 mV bias voltage and at room temperature.

Figure 2b schematically illustrates a device 10' for detecting light according to a second embodiment of the invention, said device 10' having a second geometry. The device 10' having the second geometry is also referred to as "lateral dielectric junction". The device 10' comprises:

- the substrate S extending along the second reference plane P2;
- a first electrode E1' extending parallel to a first reference plane P1', the first reference plane P1' being substantially perpendicular to the second reference plane P2, the first electrode E1' being in contact with the substrate S;
- a stack 1' extending parallel to the first reference plane P1' and comprising:

  o a first metallic layer M1' extending along the first electrode E1', the first metallic electrode M1' being in contact with the substrate S;
  o a dielectric layer D' extending along the metallic layer M1', the dielectric layer D' being in contact with the substrate S;
  o a second metallic layer M2' extending along the dielectric layer D', the second metallic layer M2' being in contact with the substrate S;

- a second electrode E2' extending along the second metallic layer M2' of the stack 1', the second electrode E2' being substantially parallel to the first reference plane P1', the second electrode E2' being in contact with the substrate S.

Hence, both the first electrode E1', the stack 1' and the second electrode E2' of the device 10' extend laterally along the substrate S.
In other words, in the lateral dielectric junction 10', current that flows through the stack 1' between the first electrode E1' and the second electrode E2' is parallel to the substrate S.

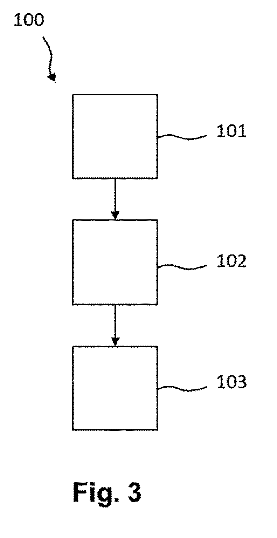

Figure 3 schematically illustrates a diagram of the steps of a process 100 of detection of light according to an embodiment of the invention. The process 100 comprises the following steps:

- a step 101 of flowing an electric current through the stack 1 of the normal dielectric junction 10 or through the stack 1' of the lateral dielectric junction 10' that have been previously described, referred to as "first stack";
- a step 102 of measuring the electric resistance of said first stack 1, 1';
- a step 103 of determining the presence or the absence of light by using the measured electric resistance of said first stack 1, 1'.

The process 100 allows relative detection of light. The process 100 may allow binary detection of light, that is to say, detection of the presence or the absence of light. The process 100 may initially comprise a first calibration step, wherein:

- experimental conditions are controlled so as to insure that no light is impinging said normal dielectric junction 10 or said lateral dielectric junction 10', and
- the electric resistance of the stack 1 of the normal dielectric junction 10 or the electric resistance of the stack 1' of the lateral dielectric junction 10' is measured.

The process 100 that has just been described may further comprise a step of measuring the polarization of light that may be impinging on the stack 1 of the normal dielectric junction 10 or from the stack 1' of the lateral dielectric junction 10', referred to as "first stack". In the case where light is impinging on said first stack 1, 1', said step of measuring polarization allows for a relative characterization of light impinging on said stack 1. In the case where the process 100 comprises said step of polarization measurement, the process 100 may beneficially comprise a second calibration step, wherein:

- experimental conditions are controlled so as to insure that non-polarized light is impinging said normal dielectric junction 10 or said lateral dielectric junction 10', and
- the polarization of light impinging on the stack 1 of the normal dielectric junction 10 or of the stack 1' of the lateral dielectric junction 10' is measured.

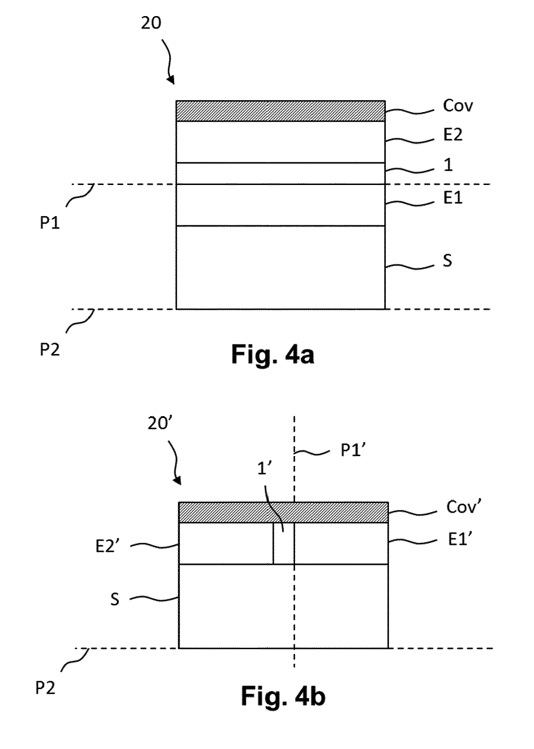

Figure 4a schematically illustrates a normal reference device 20 for quantifying detected light that comprises:

- the normal dielectric junction 10 that has been previously described, and
- an optically opaque cover Cov extending along the second electrode E2 of the normal dielectric junction 10, the optically opaque cover Cov being substantially parallel to the second reference plane P2.

Figure 4b schematically illustrates a lateral reference device 20' for quantifying detected light that comprises:

- the lateral dielectric junction 10' that has been previously described, and
- an optically opaque cover Cov' extending along both the first electrode E1', the stack 1' and the second electrode E2' of the lateral dielectric junction 10', the optically opaque cover Cov' being substantially parallel to the second reference plane P2.

The opaque cover Cov may for example consist in an Al film with a thickness of 65 nm with a transmission coefficient <$10^{-4}$ across the 390-700 nm visible wavelength range. Additional thickness of the Al film will improve the opacity. The opaque cover Cov' may for example consist in LiF/Al with a transmission coefficient <$10^{-4}$ across the 390-700 nm visible wavelength range. The lithium fluoride LiF film of the opaque cover Cov' serves to electrically isolate the electrodes from the opaque cover Cov'. As such, the thickness w_LiF of the lithium fluoride LiF film is beneficially one order of magnitude larger than the thickness w_D of the dielectric layer D, that is, the thickness of the lithium fluoride LiF film is beneficially:

$$w\_LiF = 10 \times w\_D$$

The Al film of the opaque cover Cov' is deposited on the Lif film. The Al film may have a thickness of 65 nm, as previously described.

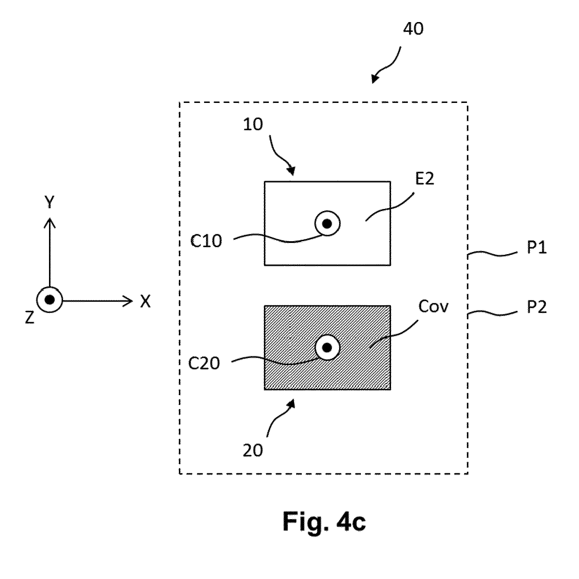

Figure 4c schematically illustrates a device 40 allowing quantifying the presence or the absence of light, said device 40 comprising:

- a normal dielectric junction 10, and
- a normal reference device 20 for quantifying detected light.

A first axis X, a second axis Y and a third axis Z are represented in figure 4c.
In the case a current flows through the normal dielectric junction 10, the direction C10 of said current is normal to the first reference plane P1 of said normal dielectric junction 10. In the case a current flows through the normal reference device 20 for quantifying detected light, the direction C20 of said current is normal to the first reference plane P1 of said normal reference device 20 for quantifying detected light.
Figure 4c shows that the normal dielectric junction 10 and the normal reference device 20 for quantifying detected light are oriented relative to each other in such a way that the first reference plane P1 of the normal dielectric junction 10 and the first reference plane P1 of the normal reference device 20 for quantifying detected light are parallel.
In the particular example of the device 40 illustrated in figure 4c, the normal dielectric junction 10 and the normal reference device 20 for quantifying detected light have the same coordinates according to the first axis X, and different coordinates according to the second axis Y.
In another example, the normal dielectric junction 10 and the normal reference device 20 for quantifying detected light may have the same coordinates according to the second axis Y, and different coordinates according to the first axis X.
In another example, the normal dielectric junction 10 and the normal reference device 20 for quantifying detected light may have different coordinates according the first axis X and different coordinates according to the second axis Y.
In the particular example of the device 40 illustrated in figure 4c, the first reference plane P1 of the normal dielectric junction 10 and the first reference plane P1 of the normal reference device 20 for quantifying detected light are merged, that is to say, the normal dielectric junction 10 and the normal reference device 20 for quantifying detected light have the same coordinates according the third axis Z. However it is not necessary, that is to say, the normal dielectric junction 10 and the normal reference device 20 for quantifying detected light may have different coordinates according to the third axis Z. The only condition here is that the operational characteristics of both the normal reference device 20 and the normal dielectric junction 10 in the absence of light impinging on the normal dielectric junction 10 be identical. In this case, one may not only position one device at an arbitrary position (x,y) relative to the other, but also beneficially superimpose the normal dielectric junction 10 on top of the normal reference device 20 so as to reduce the effective surface area of device 40.

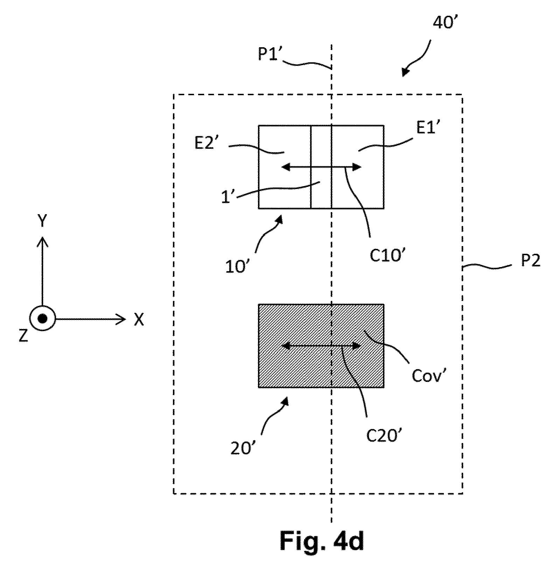

Figure 4d schematically illustrates a device 40' allowing quantifying the presence or the absence of light, said device 40' comprising:

- a lateral dielectric junction 10', and
- a lateral reference device 20' for quantifying detected light.

In the case a current flows through the lateral dielectric junction 10', the direction C10' of said current is normal to the first reference plane P1' of said lateral dielectric junction 10'. In the case a current flows through the lateral reference device 20 for quantifying detected light, the direction C20' of said current is normal to the first reference plane P1' of said lateral reference device 20' for quantifying detected light.

In the particular example of the device 40' illustrated in figure 4d, the lateral dielectric junction 10' and the lateral reference device 20' for quantifying detected light have the same coordinates according to the first axis X, and different coordinates according to the second axis Y.

In another example, the lateral dielectric junction 10' and the lateral reference device 20' for quantifying detected light may have the same coordinates according to the second axis Y, and different coordinates according to the first axis X.

In another example, the lateral dielectric junction 10' and the lateral reference device 20' for quantifying detected light may have different coordinates according the first axis X and different coordinates according to the second axis Y.

Figure 4d shows that the lateral dielectric junction 10' and the lateral reference device 20' for quantifying detected light are oriented relative to each other in such a way that the second reference plane P2 of the lateral dielectric junction 10' and the second reference plane P2 of the lateral reference device 20' for quantifying detected light are parallel.

In the particular example of the device 40' illustrated in figure 4d, the first reference plane P2 of the lateral dielectric junction 10' and the first reference plane P2 of the lateral reference device 20' for quantifying detected light are merged, that is to say, the lateral dielectric junction 10' and the lateral reference device 20' for quantifying detected light have the same coordinates according the third axis Z. However it is not necessary, that is to say, the lateral dielectric junction 10' and the lateral reference device 20' for quantifying detected light may have different coordinates according to the third axis Z. The only condition here is that the operational characteristics of both the lateral reference device 20' and the lateral dielectric junction 10' in the absence of light impinging on the lateral dielectric junction 10' be identical. In this case, one may not only position one device at an arbitrary position (x,y) relative to the other, but also beneficially superimpose the lateral dielectric junction 10' on top of the lateral reference device 20' so as to reduce the effective surface area of device 40.

In the particular example of the device 40' illustrated in figure 4d, the first reference plane P1' of the lateral dielectric junction 10' and the first reference plane P1' of the lateral reference device 20' for quantifying detected light are beneficially parallel. In this way, the device 40' illustrated in figure 4d is adapted both to the case of an isotropic conduction through the dielectric layers D, and to the case of an anisotropic conduction through the dielectric layers D. If the conduction through the dielectric layers D is isotropic, this means that the conduction will be the same regardless of the absolute direction of current propagation. The lateral reference device 20' for quantifying detected light may have a current C20' that is not parallel to the current C10' of the lateral dielectric junction 10'. In the case of isotropic conduction, the first reference plane P1' of the lateral dielectric junction 10' and the first reference plane P1' of the lateral reference device 20' for quantifying detected light may be parallel but it is not necessary.

If the conduction through the dielectric layers D is anisotropic, then the conduction will not be the same for two given directions of current propagation through D. In this case, to act as a good reference of the current flowing through the lateral dielectric junction 10' in the absence of light, the lateral reference device 20' has a current C20' that is parallel to the current C10' of the lateral dielectric junction 10'. Thus, in the case of anisotropic conduction, the first reference plane P1' of the lateral dielectric junction 10' and the first reference plane P1' of the lateral reference device 20' for quantifying detected light are parallel.

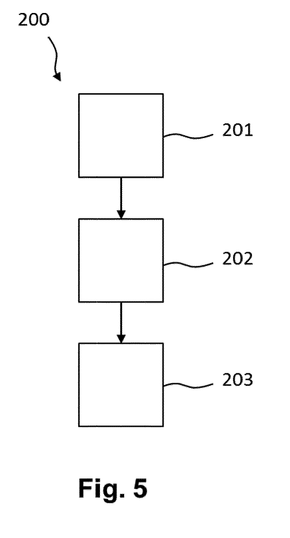

Figure 5 schematically illustrates a diagram of the steps of a process 200 of quantification of the presence or the absence of light according to an embodiment of the invention. The process 200 typically uses:

- a normal dielectric junction 10 or a lateral dielectric junction 10', referred to as "dielectric junction", and
- a normal reference device 20 for quantifying detected light or a lateral reference device 20' for quantifying detected light, referred to as "reference device for quantifying detected light".

The process 200 comprises the following steps:

- a step 201 of flowing an electric current:

    o through the stack 1, 1' of the dielectric junction 10, 10', referred to as "first stack", and
    o through the stack 1, 1' of the reference device for quantifying detected light 20, 20', referred to as "second stack";

- a step 202 of measuring the electric resistance of said first stack and of said second stack;
- a step 203 of quantifying the presence or the absence of light around said first stack by comparing the measured electric resistance of said first stack with the measured electric resistance of said second stack.

The process 200 allows absolute detection of light, that is to say its quantification, irrespective of any other measurement. It is to be noted that:

- in the case where a normal dielectric junction 10 and a normal reference device 20 for quantifying detected light are used, that is, in the case of a device 40 allowing quantifying the presence or the absence of light: the electric current flowing through said first stack and the electric current flowing through said second stack are both in a same plane;

- in the case where a lateral dielectric junction 10' and a lateral reference device 20' for quantifying detected light are used, that is, in the case of a device 40' allowing quantifying the presence or the absence of light: the electric current flowing through said first stack and the electric current flowing through said second stack may be both in a same plane, but it is not necessary.

The process 200 that has just been described may further comprise a step of measuring the polarization of light that may be impinging on the first stack. Said step of measuring polarization allows relative characterization of light impinging on said first stack.

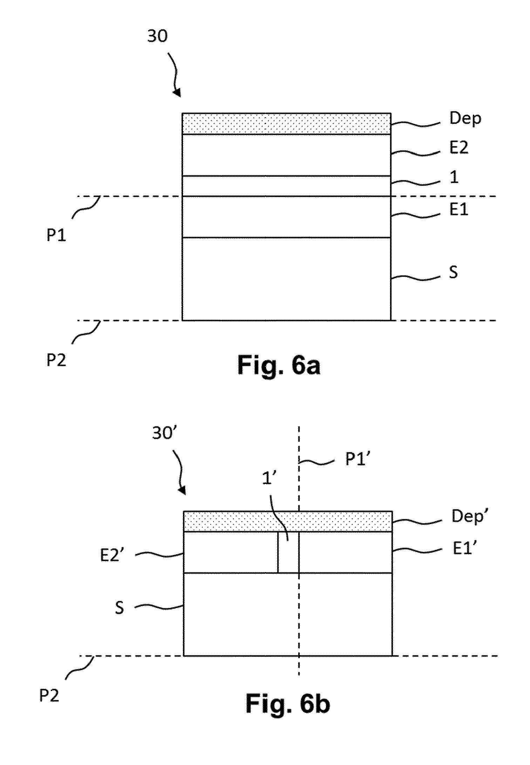

Figure 6a schematically illustrates a normal reference device 30 for characterizing detected light along a first spatial direction that comprises:

- the normal dielectric junction 10 that has been previously described, and
- a light depolarizer Dep extending along the second electrode E2 of the normal dielectric junction 10, the light depolarizer Dep being substantially parallel to the second reference plane P2.

Figure 6b schematically illustrates a lateral reference device 30' for characterizing detected light along a first spatial direction that comprises:

- the lateral dielectric junction 10' that has been previously described, and a light depolarizer Dep' extending along both the first electrode E1', the stack 1' and the second electrode E2' of the lateral dielectric junction 10', the light depolarizer Dep' being substantially parallel to the second reference plane P2.

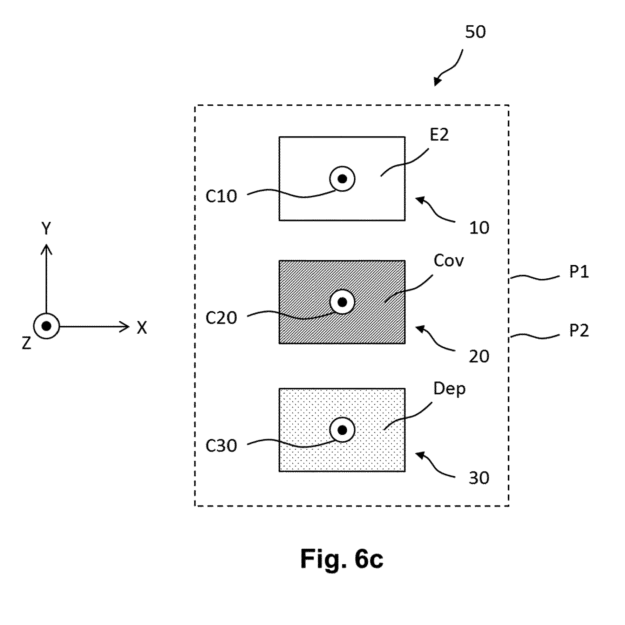

Figure 6c schematically illustrates a device 50 allowing quantifying the presence or the absence of light and characterizing light along a first spatial direction, said device 50 comprising:

- a normal dielectric junction 10,
- a normal reference device 20 for quantifying detected light, and
- a normal reference device 30 for characterizing detected light along a first spatial direction.

Figure 6c shows that the normal dielectric junction 10 and the normal reference device 20 for quantifying detected light are oriented relative to each other in such a way that the first reference plane P1 of the normal dielectric junction 10 and the first reference plane P1 of the normal reference device 20 for quantifying detected light are parallel. The device 50 illustrated in figure 6c is thus both adapted to:

- the case where the conduction through the dielectric layers D of the normal dielectric junction 10 and of the normal reference device 20 for quantifying detected light is isotropic, and
- the case where the conduction through the dielectric layers D of the normal dielectric junction 10 and of the normal reference device 20 for quantifying detected light is anisotropic.

Figure 6c further shows that the normal dielectric junction 10 and the normal reference device 30 for characterizing detected light along a first spatial direction are oriented relative to each other in such a way that the first reference plane P1 of the normal dielectric junction 10 and the first reference plane P1 of the normal reference device 30 for characterizing detected light along a first spatial direction are parallel. The device 50 illustrated in figure 6c is thus both adapted to:

- the case where the impact of depolarized light on conduction is anisotropic, and
- the case where the impact of depolarized light on conduction is isotropic.

"The impact of depolarized light on conduction is anisotropic" means that conduction depends on the orientation of the depolarized light that may be impinging on the normal reference device 30 for characterizing detected light along a first spatial direction.

"The impact of depolarized light on conduction is isotropic" means that conduction does not depend on the orientation of the depolarized light that may be impinging on the normal reference device 30 for characterizing detected light along a first spatial direction.

In the particular example of the device 50 illustrated in figure 6c, the first reference plane P1 of the normal dielectric junction 10, the first reference plane P1 of the normal reference device 20 for quantifying detected light and the first reference plane P1 of the normal reference device 30 for characterizing detected light along a the first spatial direction are merged, that is to say, the normal dielectric junction 10, the normal reference device 20 for quantifying detected light and the normal reference device 30 for characterizing detected light along a the first spatial direction have the same coordinates according the third axis Z. However it is not necessary, that is to say, the normal dielectric junction 10, the normal reference device 20 for quantifying detected light and the normal reference device 30 for characterizing detected light along a the first spatial direction may have different coordinates according to the third axis Z. Beneficially, the normal reference device 20 for quantifying detected light and the normal reference device 30 for characterizing detected light along a the first spatial direction share the same reference plane P1 and are positioned close to one another so that these devices are exposed to the same flux of light.

In the particular example of the device 50 illustrated in figure 6c, the normal dielectric junction 10, the normal reference device 20 for quantifying detected light and the normal reference device 30 for characterizing detected light along a the first spatial direction have the same coordinates according to the first axis X, and different coordinates according to the second axis Y.

In another example, the normal dielectric junction 10, the normal reference device 20 for quantifying detected light and the normal reference device 30 for characterizing detected light along a the first spatial direction may have the same coordinates according to the second axis Y, and different coordinates according to the first axis X.

In another example, the normal dielectric junction 10, the normal reference device 20 for quantifying detected light and the normal reference device 30 for characterizing detected light along a the first spatial direction may have different coordinates according the first axis X and different coordinates according to the second axis Y.

While respecting these positioning criteria, the previously described considerations of relative positioning between the normal dielectric junction 10 and the normal reference device 20 that apply for device 40 also apply to the normal dielectric junction 10 and the normal reference device 20 of device 50.

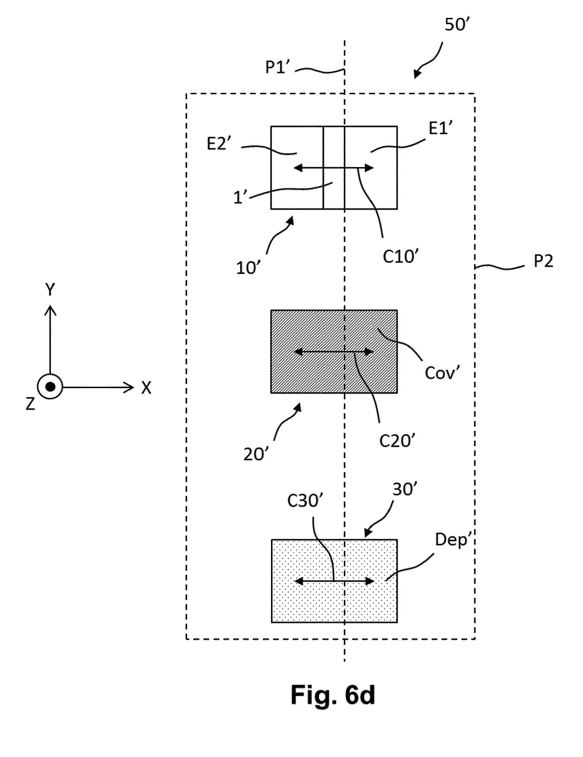

Figure 6d schematically illustrates a device 50' allowing quantifying the presence or the absence of light and characterizing light along a first spatial direction, said device 50' comprising:

- a lateral dielectric junction 10',
- a lateral reference device 20' for quantifying detected light, and
- a lateral reference device 30' for characterizing detected light along a first spatial direction.

Figure 6d shows that the lateral dielectric junction 10' and the lateral reference device 20' for quantifying detected light are oriented relative to each other in such a way that the second reference plane P2 of the lateral dielectric junction 10' and the second reference plane P2 of the lateral reference device 20' for quantifying detected light are parallel.

In the particular example of the device 50' illustrated in figure 6d, the first reference plane P1' of the lateral dielectric junction 10' and the first reference plane P1' of the lateral reference device 20' for quantifying detected light are parallel.

The device 50' illustrated in figure 6d is thus both adapted to:

- the case where the conduction through the dielectric layers D of the lateral dielectric junction 10' and of the lateral reference device 20' for quantifying detected light is isotropic, and
- the case where the conduction through the dielectric layers D of the lateral dielectric junction 10' and of the lateral reference device 20' for quantifying detected light is anisotropic.

In the case of isotropic conduction, the first reference plane P1' of the lateral dielectric junction 10' and the first reference plane P1' of the lateral reference device 20' for quantifying detected light may be parallel but it is not necessary.

Figure 6d further shows that the lateral dielectric junction 10' and the lateral reference device 30' for characterizing detected light along a first spatial direction are oriented relative to each other in such a way that the second reference plane P2 of the lateral dielectric junction 10' and the second reference plane P2 of the lateral reference device 30' for characterizing detected light along a first spatial direction are parallel.

In the particular example of the device 50' illustrated in figure 6d, the first reference plane P1' of the lateral dielectric junction 10' and the first reference plane P1' of the lateral reference device 30' for characterizing detected light along a first spatial direction are beneficially parallel. In this way, the device 50' illustrated in figure 6d is both adapted to:

- the case where the impact of depolarized light on conduction is anisotropic, and
- the case where the impact of depolarized light on conduction is isotropic.

In the case of isotropic impact of depolarized light on conduction, the first reference plane P1' of the lateral dielectric junction 10' and the first reference plane P1' of the lateral reference device 30' for characterizing detected light along a first spatial direction may be parallel but it is not necessary.

While respecting these positioning criteria, the previously described considerations of relative positioning between the lateral dielectric junction 10' and the lateral reference device 20' that apply for device 40' also apply to the lateral dielectric junction 10' and the lateral reference device 20' of device 50'. Beneficially, the lateral reference device 20' for quantifying detected light and the lateral reference device 30' for characterizing detected light along a the first spatial direction share the same reference plane P2 and are positioned close to one another so that these devices are exposed to the same flux of light.

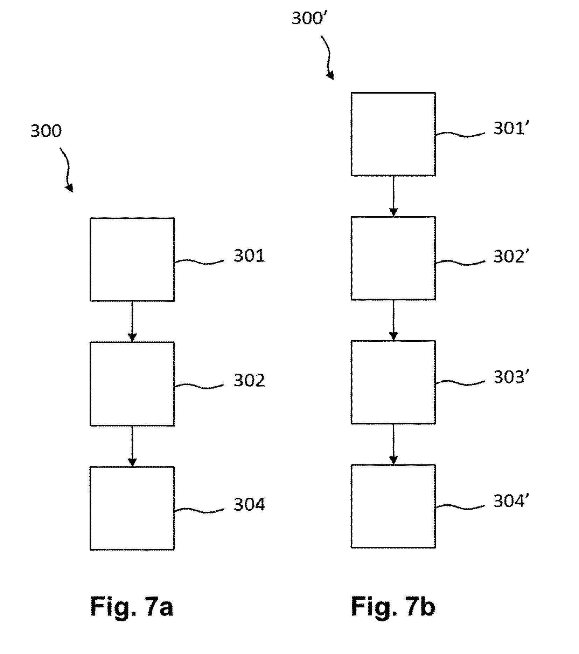

Figure 7a schematically illustrates a diagram of the steps of a process 300 of characterization of light along a first spatial direction, according to an embodiment of the invention. The process 300 typically uses:

- a normal dielectric junction 10 or a lateral dielectric junction 10', referred to as "dielectric junction", and
- a normal reference device 30 for characterizing detected light along a first spatial direction or a lateral reference device 30' for characterizing detected light along a first spatial direction, referred to as "reference device for characterizing detected light along a first spatial direction".

The process 300 comprises the following steps:

- a step 301 of flowing an electric current:

    o through the stack of the dielectric junction 10 or 10', referred to as "first stack", and
    o through the stack of the reference device for characterizing detected light along a first spatial direction 30 or 30', referred to as "third stack";

- a step 302 of measuring the electric resistance of said first stack and of said third stack;
- a step 304 of characterizing the degree to which detected light is polarized along a first spatial direction by comparing the measured electric resistance of said first stack with the measured electric resistance of said third stack.

The process 300 allows absolute characterization along a first spatial direction of light impinging on said first stack.

Figure 7b schematically illustrates a diagram of the steps of a process 300' of quantification of the presence or the absence of light and of characterization of light along a first spatial direction, according to an embodiment of the invention. The process 300' typically uses:

- a normal dielectric junction 10 or a lateral dielectric junction 10', referred to as "dielectric junction",
- a normal reference device 20 for quantifying detected light or a lateral reference device 20' for quantifying detected light, referred to as "reference device for quantifying detected light", and
- a normal reference device 30 for characterizing detected light along a first spatial direction or a lateral reference device 30' for characterizing detected light along a first spatial direction, referred to as "reference device for characterizing detected light along a first spatial direction".

The process 300' comprises the following steps:

- a step 301' of flowing an electric current:

    o through the stack of the dielectric junction 10 or 10', referred to as "first stack",
    o through the stack of the reference device for quantifying detected light 20 or 20', referred to as "second stack" and
    o through the stack of the reference device for characterizing detected light along a first spatial direction 30 or 30', referred to as "third stack";

- a step 302' of measuring the electric resistance of said first stack, of said second stack and of said third stack;
- a step 303' of quantifying the presence or the absence of light around said first stack by comparing the measured electric resistance of said first stack with the measured electric resistance of said second stack, and
- a step 304' of characterizing the degree to which light is polarized along a first spatial direction by comparing the measured electric resistance of said first stack with the measured electric resistance of said third stack.

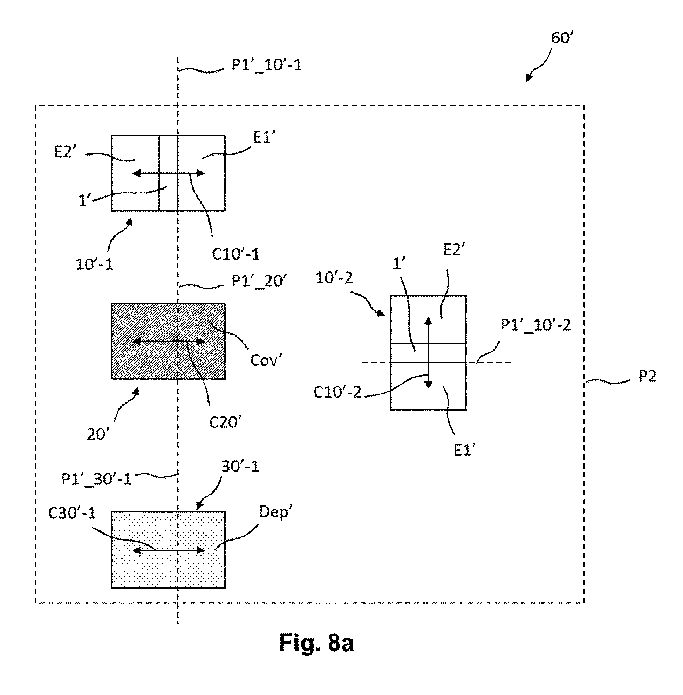

Figure 8a schematically illustrates a device 60' allowing quantifying the presence or the absence of light and characterizing light along a first spatial direction and along a second spatial direction.
The device 60' illustrated in figure 8a comprises:

- a first lateral dielectric junction 10' that is referenced "10'-1" in figure 8a and hereinafter for clarity, said first lateral dielectric junction 10'-1 having a first reference plane P1' that is referenced "P1'_10'-1" in figure 8a and hereinafter for clarity,

- a lateral reference device 20' for quantifying detected light having a first reference plane P1' that is referenced "P1_20'" in figure 8a and hereinafter for clarity,
- a first lateral reference device 30' for characterizing detected light that is referenced "30'_1" in figure 8a and hereinafter for clarity, said first lateral reference device 30'_1 having a first reference plane P1' that is referenced "P1_30'-1" in figure 8a and hereinafter for clarity,
- a second lateral dielectric junction 10' that is referenced "10_2" in figure 8a and hereinafter for clarity, said second lateral dielectric junction 10'-2 having a first reference plane P1' that is referenced "P1'_10'-2" in figure 8a and hereinafter for clarity.

The device 60' illustrated in figure 8a is adapted to the case where:

- the conduction through the dielectric layers D is isotropic, and
- the impact of depolarized light on conduction is isotropic.

Figure 8a shows that the first lateral dielectric junction 10'-1 and the lateral reference device 20' for quantifying detected light are oriented relative to each other in such a way that the second reference plane P2 of the first lateral dielectric junction 10'-1 and the second reference plane P2 of the lateral reference device 20' for quantifying detected light are parallel. As previously described in relation with figure 4d, the first reference plane P1'_10'-1 of the first lateral dielectric junction 10'-1 and the first reference plane P1'_20' of the lateral reference device 20' for quantifying detected light are beneficially parallel, but it is not necessary in the case of isotropic conduction through the dielectric layers D. Figure 8a further shows that the first lateral dielectric junction 10'-1 and the first lateral reference device 30'-1 for characterizing detected light are oriented relative to each other in such a way that the second reference plane P2 of the first lateral dielectric junction 10'-1 and the second reference plane P2 of the first lateral reference device 30'-1 for characterizing detected light are parallel. As previously described in relation with figure 6d, the first reference plane P1'_10'-1 of the first lateral dielectric junction 10'-1 and the first reference plane P1_30'-1 of the lateral reference device 30'-1 for characterizing detected light are beneficially parallel, but it is not necessary in the case of isotropic conduction through the dielectric layers D.
The first reference plane P1'_10'-2 of the second lateral dielectric junction 10'-2 is not parallel to the first reference plane P1'_10'-1 of the first lateral dielectric junction 10'-1. In a particular embodiment, the first reference plane P1'_10'-2 of the second lateral dielectric junction 10'-2 is beneficially perpendicular to the first reference plane P1'_10'-1 of the first lateral dielectric junction 10'-1.

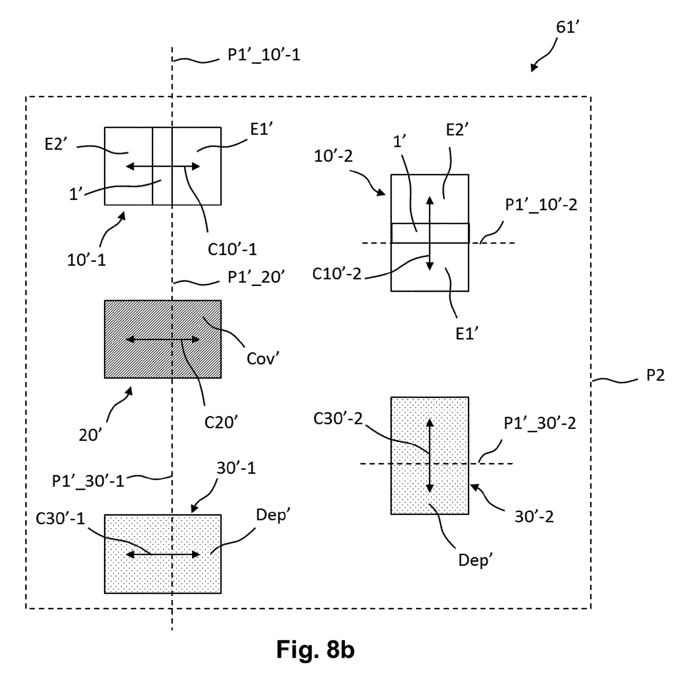

Figure 8b schematically illustrates a device 61' allowing quantifying the presence or the absence of light and characterizing light along a first spatial direction and along a second spatial direction, according to a first variant.
The device 61' according to the first variant illustrated in figure 8b further comprises:

- a second lateral reference device 30' for characterizing detected light that is referenced "30'_2" in figure 8b and hereinafter for clarity, said second lateral reference device 30'_2 having a first reference plane P1' that is referenced "P1'_30'-2" in figure 8b and hereinafter for clarity,

Said device 61' is adapted to:

- the case where the conduction through the dielectric layers D is isotropic, and
- both the case where the impact of depolarized light on conduction is anisotropic and the case where the impact of depolarized light on conduction is isotropic.

Figure 8b shows that the second lateral dielectric junction 10'-2 and the second lateral reference device 30'-2 for characterizing detected light are oriented relative to each other in such a way that the second reference plane P2 of the second lateral dielectric junction 10'-2 and the second reference plane P2 of the second lateral reference device 30'-2 for characterizing detected light are parallel.
Figure 8b also shows that the second lateral dielectric junction 10'-2 and the second lateral reference device 30'-2 for characterizing detected light are oriented relative to each other in such a way that the first reference plane P1'_10'-2 of the second lateral dielectric junction 10'-2 and the first reference plane P1'_30'-2 of the second lateral reference device 30'-2 are parallel, in order to address the case of anisotropic impact of depolarized light on conduction through the dielectric layer D of the second lateral reference device 30'-2 for characterizing detected light. As previously described in relation with figure 6d, the first reference plane P1'_10'-1 of the first lateral dielectric junction 10'-1 and the first reference plane P1'_30'-1 of the lateral reference device 30'-1 for characterizing detected light are beneficially parallel, but it is not necessary in the case of isotropic impact of depolarized light on conduction through the dielectric layer D of the second lateral reference device 30'-2 for characterizing detected light.

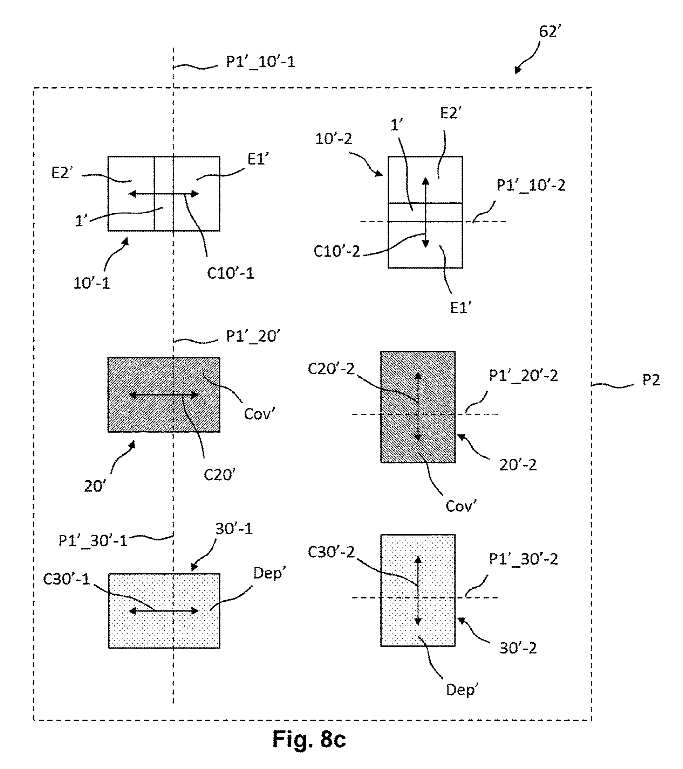

Figure 8c schematically illustrates a device 62' allowing quantifying the presence or the absence of light and characterizing light along a first spatial direction and along a second spatial direction, according to a second variant. The device 62' according to the second variant illustrated in figure 8c further comprises:

- a second lateral reference device 20' for quantifying detected light that is referenced "20'-2" in figure 8c and hereinafter for clarity, said second lateral reference device 20'-2 having a first reference plane P1' that is referenced "P1 _20'-2''" in figure 8c and hereinafter for clarity.

The device 62' illustrated in figure 8c is adapted to:

- both the case where the conduction through the dielectric layers D is isotropic and the case where the conduction through the dielectric layers D is anisotropic, and
- both the case where the impact of depolarized light on conduction is anisotropic and the case where the impact of depolarized light on conduction is isotropic.

Figure 8c shows that the second lateral dielectric junction 10'-2 and the second lateral reference device 20'-2 for quantifying detected light are oriented relative to each other in such a way that the second reference plane P2 of the second lateral dielectric junction 10'-2 and the second reference plane P2 of the second lateral reference device 20'-2 for quantifying detected light are parallel.

Figure 8c also shows that the second lateral dielectric junction 10'-2 and the second lateral reference device 20'-2 for quantifying detected light are oriented relative to each other in such a way that the first reference plane P1'_10'-2 of the second lateral dielectric junction 10'-2 and the first reference plane P1'_20'-2 of the second lateral reference device 20'-2 are parallel, in order to address the case of anisotropic conduction through the dielectric layers D.

Three particular examples of devices allowing quantifying the presence or the absence of light and characterizing light along a first spatial direction and along a second spatial direction, according to the invention, have just been described:

- the device 60' illustrated in figure 8a;
- the device 61' according to the first variant illustrated in figure 8b, and
- the device 62' according to the second variant illustrated in figure 8c.

These three particular examples are "lateral" devices, meaning that they use elements with lateral geometry. Other examples using elements with normal geometry instead of elements with lateral geometry are also possible within the scope of the present invention.

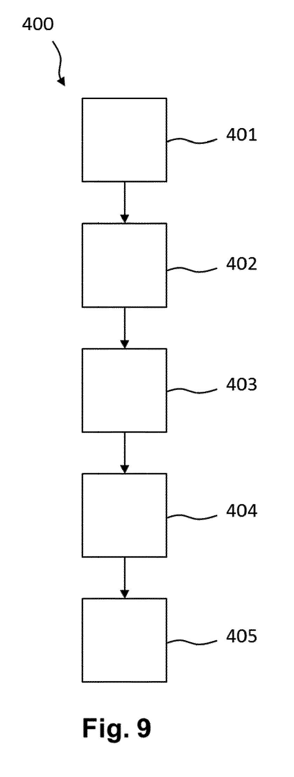

Figure 9 schematically illustrates a diagram of the steps of a process 400 of quantification of the presence or the absence of light and of characterization of light along a first spatial direction and along a second spatial direction, according to an embodiment of the invention. The process 400 may typically use the device 60' illustrated in figure 8a or the device 61' illustrated in figure 8b or the device 62' illustrated in figure 8c.

The process 400 thus typically uses:

- a first normal dielectric junction 10 or a first lateral dielectric junction 10', referred to as "first dielectric junction",
- at least a normal reference device 20 for quantifying detected light or a lateral reference device 20' for quantifying detected light, referred to as "reference device for quantifying detected light",
- at least a normal reference device 30 for characterizing detected light or a lateral reference device 30' for characterizing detected light, referred to as "reference device for characterizing detected light", and
- a second normal dielectric junction 10 or a second lateral dielectric junction 10', referred to as "second dielectric junction".

The process 400 comprises the following steps:

- a step 401 of flowing an electric current:

  o through the stack of the first dielectric junction,
  o through the stack of the reference device for quantifying detected light,
  o through the stack of the reference device for characterizing detected light, and
  o through the stack of the second dielectric junction;

- a step 402 of measuring the electric resistance of:

  o the first dielectric junction,
  o the reference device for quantifying detected light,
  o the reference device for characterizing detected light, and
  o the second dielectric junction;

- a step 403 of quantifying the presence or the absence of light:

  o around the first dielectric junction by comparing the measured electric resistance of the first dielectric junction with the measured electric resistance of the reference device for quantifying detected light,
  o and/or around the second dielectric junction by comparing the measured electric resistance of the second dielectric junction with the measured electric resistance of the reference device for quantifying detected light;

- a step 404 of characterizing the degree to which light around the first dielectric junction is polarized along a first spatial direction by comparing the measured electric resistance of the first dielectric junction with the measured electric resistance of the reference device for characterizing detected light;
- a step 405 of characterizing the degree to which light around the second dielectric junction is polarized along a second spatial direction by comparing the measured electric resistance of the second dielectric junction with the measured electric resistance of the reference device for characterizing detected light.

Within variants 61' and 62', the comparisons of electric resistance between a first or second dielectric junction and either a reference device for quantifying detected light or a reference device for characterizing detected light shall proceed so as to pair devices whose currents are parallel one to another.

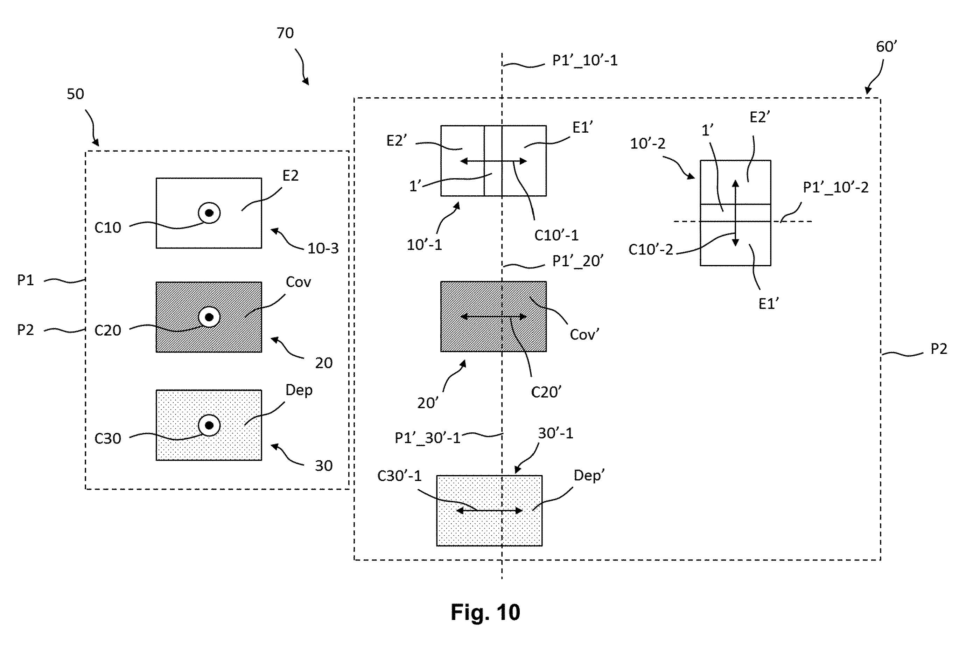

Figure 10 schematically illustrates a device 70 allowing quantifying the presence or the absence of light and characterizing light along a first spatial direction, along a second spatial direction and along a third spatial direction. The device 70 illustrated in figure 10 comprises:

- the device 50 previously described in relation with figure 6c, and
- the device 60' previously described in relation with figure 8a.

Figure 10 shows that the second reference plane P2 of the device 50 and the second reference plane P2 of the device 60' are parallel. This is not necessary but is beneficial so that device 50 within device 70 may optimally probe light along a spatial direction that is not probed by device 60' within device 70.

Other examples of devices according to the invention allowing quantifying the presence or the absence of light and characterizing light along a first spatial direction, along a second spatial direction and along a third spatial direction are possible within the scope of the present invention, and especially:

- a device comprising the device 50 previously described in relation with figure 6c and the device 61' previously described in relation with figure 8b;
- a device comprising the device 50 previously described in relation with figure 6c and the device 62' previously described in relation with figure 8c.

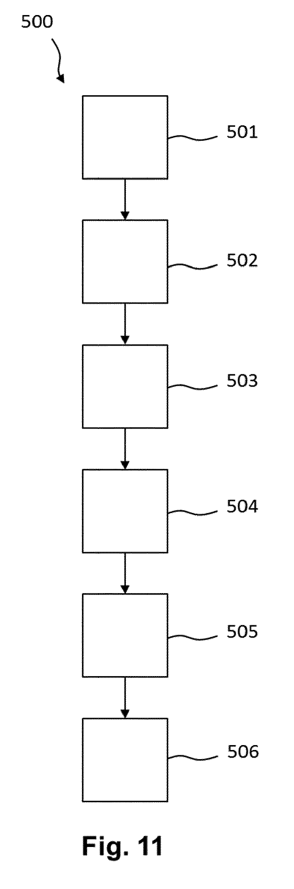

Figure 11 schematically illustrates a diagram of the steps of a process 500 of quantification of the presence or the absence of light and of characterization of light along a first spatial direction, along a second spatial direction and along a third spatial direction, according to an embodiment of the invention.
The process 500 may typically use the device 70 illustrated in figure 10 and comprising:

- the lateral dielectric junction 10'-1, referred to as "first dielectric junction";
- the lateral dielectric junction 10'-2, referred to as "second dielectric junction";
- the normal dielectric junction 10-3, referred to as "third dielectric junction";
- the lateral reference device 20' for quantifying detected light;
- the normal reference device 20 for quantifying detected light;
- the lateral reference device 30'-1 for characterizing detected light, and
- the normal reference device 30 for characterizing detected light.

The process 500 comprises the following steps:

- a step 501 of flowing an electric current:

  o through the stack of the first dielectric junction 10'-1,
  o through the stack of the second dielectric junction 10'-2,
  o through the stack of the third dielectric junction 10-3,
  o through the stack of the lateral reference device 20' for quantifying detected light,
  o through the stack of the normal reference device 20 for quantifying detected light,
  o through the stack of the lateral reference device 30' for characterizing detected light, and
  o through the stack of the normal reference device 30 for characterizing detected light;

- a step 502 of measuring the electric resistance of:

  o the first dielectric junction 10'-1,
  o the second dielectric junction 10'-2,
  o the third dielectric junction 10-3,
  o the lateral reference device 20' for quantifying detected light,
  o the normal reference device 20 for quantifying detected light,
  o the lateral reference device 30' for characterizing detected light, and
  o the normal reference device 30 for characterizing detected light;

- a step 503 of quantifying the presence or the absence of light:

  o around the first dielectric junction 10'-1 by comparing the measured electric resistance of the first dielectric junction 10'-1 with the measured electric resistance of the lateral reference device 20' for quantifying detected light,
  o and/or around the second dielectric 10'-2 junction by comparing the measured electric resistance of the second dielectric junction 10'-2 with the measured electric resistance of the lateral reference device 20' for quantifying detected light, and
  o and/or around the third dielectric junction 10-3 by comparing the measured electric resistance of the third dielectric junction 10-3 with the measured electric resistance of the normal reference device 20 for quantifying detected light;

- a step 504 of characterizing the degree to which light around the first dielectric junction 10'-1 is polarized along a first spatial direction by comparing the measured electric resistance of the first dielectric junction 10'-1 with the measured electric resistance of the lateral reference device 30'-1 for characterizing detected light;
- a step 505 of characterizing the degree to which light around the second dielectric junction 10'-2 is polarized along a second spatial direction by comparing the measured electric resistance of the second dielectric junction 10'-2 with the measured electric resistance of the lateral reference device 30'-1 for characterizing detected light;
- a step 506 of characterizing the degree to which light around the third dielectric junction 10-3 is polarized along a third spatial direction by comparing the measured electric resistance of the third dielectric junction 10-3 with the measured electric resistance of the normal reference device 30 for characterizing detected light.

A three-dimensional polarization vector of light, that is to say a three-dimensional vector comprising the degree to which light impinging on the device is polarized along the first, second and third spatial directions, may thus be obtained, allowing one to determine the propagation direction of light.


**Claims**

1.  A process (100, 200, 300, 300', 400, 500) of detection of light comprising:

    - a step (101, 201, 301, 301', 401, 501) of flowing an electric current through at least a first dielectric junction (10, 10', 10'-1), said first dielectric junction comprising at least a first metallic layer (M1) extending along a first reference plane (P1, P1') and a second metallic layer (M2) extending parallel to said first reference plane (P1, P1'), said first and second metallic layers being separated from each other by a dielectric layer (D) ensuring non-ohmic conduction between said first and second metallic layers;
    - a step (102, 202, 302, 302', 402, 502) of measuring the electric resistance of the first dielectric junction (10, 10', 10'-1);

- a step (103, 203, 303' 403, 503) of determining the presence or the absence of light by using the measured electric resistance of the first dielectric junction (10, 10', 10'-1).

2. A process (100, 200, 300, 300', 400, 500) according to claim 1 wherein said dielectric layer (D) has a thickness (w_D) between 0.5 nm and 100 nm, said thickness being measured along a direction perpendicular to the first reference plane (P1, P1').

3. A process (100, 200, 300, 300', 400, 500) according to claim 1 or 2 wherein said dielectric layer (D) has a thickness (w_D) that is less than or equal to 4 nm, said thickness (w_D) being measured along a direction perpendicular to the first reference plane (P1, P1').

4. A process (100, 200, 300, 300', 400, 500) according to claim 3 wherein said thickness (w_D) of said dielectric layer (D) is between 0.6 and 3 nm.

5. A process (100, 200, 300, 300', 400, 500) according to any of the previous claims, wherein the dielectric junction (10) comprises:

  - a substrate (S) extending along a second reference plane (P2), the second reference plane (P2) being substantially parallel to the first reference plane (P1);
  - a first electrode (E1) extending along the substrate (S);
  - the first metallic layer (M1) extending along the first electrode (E1);
  - the dielectric layer (D) extending along the first metallic layer (M1);
  - the second metallic layer (M2) extending along the dielectric layer (D);
  - a second electrode (E2) extending along the second metallic layer (M2).

6. A process (100, 200, 300, 300', 400, 500) according to any of the claims 1 to 5, wherein the first dielectric junction (10', 10'-1) comprises:

  - a substrate (S) extending along a second reference plane (P2), the second reference plane (P2) being substantially perpendicular to the first reference plane (P1');
  - a first electrode (E1') extending along a plane that is substantially perpendicular to the second reference plane (P2) and substantially parallel to the first reference plane (P1'),
  - the first metallic layer (M1) extending along the first electrode (E1'),
  - the dielectric layer (D) extending along the first metallic layer (M1),
  - the second metallic layer (M2) extending along the dielectric layer (D),
  - a second electrode (E2') extending along the second metallic layer (M2).

7. A process (100, 200, 300, 300', 400, 500) according to any of the previous claims wherein said dielectric layer (D) is made of magnesium oxide MgO.

8. A process (200, 300', 400, 500) according to any of the previous claims wherein a plurality of dielectric junctions is used, said plurality of dielectric junctions comprising at least the first dielectric junction (10, 10', 10'-1) and a reference device for quantifying detected light (20, 20') further comprising an optically opaque cover (Cov, Cov'), the process further comprising:

  - a step (201, 301', 401, 501) of flowing an electric current through said first dielectric junction (10, 10', 10'-1) and through said reference device for quantifying detected light (20, 20');
  - a step (202, 302', 402, 502) of measuring the electric resistance of said first dielectric junction (10, 10', 10'-1) and of said reference device for quantifying detected light (20, 20');
  - a step (203, 303', 403, 503) of quantifying the presence or the absence of light around said first dielectric junction (10, 10', 10'-1) by comparing the measured electric resistance of the first dielectric junction with the measured electric resistance of the reference device for quantifying detected light.

9. A process (300, 300', 400, 500) according to any of claims 1 to 7 wherein a plurality of dielectric junctions is used, said plurality of dielectric junctions comprising at least the first dielectric junction (10, 10', 10'-1) and a reference device for characterizing detected light (30, 30', 30'-1) further comprising a light depolarizer (Dep, Dep'), the process comprising:

- a step (301, 301', 401, 501) of flowing an electric current through said first dielectric junction (10, 10', 10'-1) and through said third reference device for characterizing detected light (30, 30', 30'-1);
- a step (302, 302', 402, 502) of measuring the electric resistance of said first dielectric junction (10, 10', 10'-1) and of said reference device for characterizing detected light (30, 30', 30'-1);
- a step (304, 304', 404, 504) of comparing the measured electric resistance of the first electric junction with the measured electric resistance of the reference device for characterizing detected light, in order to characterize the degree to which light around the first dielectric junction is polarized along a first spatial direction.

10. A process (300', 400, 500) according to claim 9 wherein the plurality of dielectric junctions further comprises a reference device for quantifying detected light (20, 20') comprising an optically opaque cover (Cov, Cov'), the process comprising:

- a step (301', 401, 501) of flowing an electric current through said first dielectric junction (10, 10', 10'-1), through said reference device for quantifying detected light (20, 20') and through said reference device for characterizing detected light (30, 30', 30'-1);
- a step (302', 402, 502) of measuring the electric resistance of the first dielectric junction (10, 10', 10'-1), of the reference device for quantifying detected light (20, 20') and of the reference device for characterizing detected light (30, 30', 30'-1);
- a step (303', 403, 503) of comparing the measured electric resistance of the first dielectric junction (10, 10', 10'-1) with the measured electric resistance of the reference device for quantifying detected light (20, 20') in order to quantify the presence or the absence of light around the first dielectric junction (10, 10', 10'-1), and
- a step (304', 404, 504) of comparing the measured electric resistance of the first dielectric junction (10, 10', 10'-1) with the measured electric resistance of the reference device for characterizing detected light (30, 30', 30'-1) in order to characterize the degree to which light around the first dielectric junction (10, 10', 10'-1) is polarized along a first spatial direction.

11. A process (400, 500) according to claim 10 wherein the plurality of dielectric junctions further comprises a second dielectric junction (10'-2), the process comprising:

- a step (401, 501) of flowing an electric current at least through the first dielectric junction (10'-1), through the second dielectric junction (10'-2), through the reference device for quantifying detected light (20') and through the reference device for characterizing detected light (30'-1);
- a step (402, 502) of measuring the electric resistance of the first dielectric junction (10'-1), of the second dielectric junction (10'-2), of the reference device for quantifying detected light (20') and of the reference device for characterizing detected light (30'-1);
- a step (403, 503) of comparing the measured electric resistance of the first dielectric junction (10'-1) with the measured electric resistance of the reference device for quantifying detected light (20') in order to quantify the presence or the absence of light around the first dielectric junction (10'-1), and/or of comparing the measured electric resistance of the second dielectric junction (10'-2) with the measured electric resistance of the reference device for quantifying detected light (20') in order to quantify the presence or the absence of light around the second dielectric junction (10'-2);
- a step (404, 504) of comparing the measured electric resistance of the first dielectric junction (10'-1) with the measured electric resistance of the reference device for characterizing detected light (30'-1) in order to characterize the degree to which light around the first dielectric junction (10'-1) is polarized along a first spatial direction;
- a step (405, 505) of comparing the measured electric resistance of the second dielectric junction (10'-2) with the measured electric resistance of the reference device for characterizing detected light (30'-1) in order to characterize the degree to which light around the second dielectric junction (10'-2) is polarized along a second spatial direction.

12. A process (500) according to claim 11 wherein the plurality of dielectric junctions further comprises a third dielectric junction (10-3), a second reference device for quantifying detected light (20) and a second reference device for characterizing detected light (30), the process comprising:

- a step (501) of flowing an electric current at least through the first dielectric junction (10'-1), through the second dielectric junction (10'-2), through the third dielectric junction (10-3), through the reference device for quantifying detected light (20'), through the second reference device for quantifying detected light (20), through the reference device for characterizing detected light (30'-1) and through the second reference device for characterizing detected light (30);

- a step (502) of measuring the electric resistance of the first dielectric junction (10'-1), of the second dielectric junction (10'-2), of the third dielectric junction (10-3), of the reference device for quantifying detected light (20'), of the second reference device for quantifying detected light (20), of the reference device for characterizing detected light (30'-1) and of the second reference device for characterizing detected light (30);

- a step (503) of comparing the measured electric resistance of the first dielectric junction (10'-1) with the measured electric resistance of the reference device for quantifying detected light (20') in order to quantify the presence or the absence of light around the first dielectric junction (10'-1), and/or of comparing the measured electric resistance of the second dielectric junction (10'-2) with the measured electric resistance of the reference device for quantifying detected light (20') in order to quantify the presence or the absence of light around the second dielectric junction (10'-2), and/or of comparing the measured electric resistance of the third dielectric junction (10-3) with the measured electric resistance of the second reference device for quantifying detected light (20) in order to quantify the presence or the absence of light around the third dielectric junction (10-3);

- a step (504) of comparing the measured electric resistance of the first dielectric junction (10'-1) with the measured electric resistance of the reference device for characterizing detected light (30'-1) in order to characterize the degree to which light around the first dielectric junction (10'-1) is polarized along a first spatial direction;

- a step (505) of comparing the measured electric resistance of the second dielectric junction (10'-2) with the measured electric resistance of the reference device for characterizing detected light (30'-1) in order to characterize the degree to which light around the second dielectric junction (10'-2) is polarized along a second spatial direction;

- a step (506) of comparing the measured electric resistance of the third dielectric junction (10-3) with the measured electric resistance of the second reference device for characterizing detected light (30) in order to characterize the degree to which light around the third dielectric junction (10-3) is polarized along a third spatial direction.

13. A process (500) according to the previous claim wherein a three-dimensional polarization vector of light is obtained, the process comprising a step of determining the propagation direction of light.

**Fig. 1**

**Fig. 2a**

**Fig. 2b**

100

101

102

103

**Fig. 3**

20

Cov
E2
1
E1

P1

S

P2

**Fig. 4a**

20'

P1'

1'

Cov'
E2'
E1'

S

P2

**Fig. 4b**

**Fig. 4c**

**Fig. 4d**

200

201

202

203

**Fig. 5**

30

Dep

E2

1

E1

P1

S

P2

**Fig. 6a**

30'

P1'

1'

Dep'

E2'

E1'

S

P2

**Fig. 6b**

**Fig. 6c**

**Fig. 6d**

300'

301'

300

301

302'

302

303'

304

304'

**Fig. 7a**          **Fig. 7b**

**Fig. 8a**

**Fig. 8b**

**Fig. 8c**

400

401

402

403

404

405

**Fig. 9**

**Fig. 10**

500

501

502

503

504

505

506

**Fig. 11**

Europäisches
Patentamt

European
Patent Office

Office européen
des brevets

## EUROPEAN SEARCH REPORT

Application Number

EP 14 18 0354

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/001473 A1 (MORIYAMA TAKAHIRO [US] ET AL) 6 January 2011 (2011-01-06)<br>* abstract; claim 8; figures 1,3A,3B,4A,4B,5,6 *<br>* paragraphs [0003], [0004], [0022] - [0029], [0034], [0035], [0038], [0040] - [0061] * | 1-8 | INV.<br>G01J4/00<br>B82Y25/00 |
| X | EP 2 680 321 A2 (MICHALEWICZ MAREK T [SG]) 1 January 2014 (2014-01-01)<br>* abstract; figures 1-4 *<br>* paragraphs [0001], [0005], [0012], [0013], [0017] - [0020], [0034], [0036] - [0038] * | 1-8 | |
| A | JP 2005 011907 A (JAPAN SCIENCE & TECH AGENCY) 13 January 2005 (2005-01-13)<br>* the whole document * | 1-13 | |
| A | RINALDI C ET AL: "Epitaxial Fe/MgO/Ge spin-photodiodes for integrated detection of light helicity at room temperature", JOURNAL OF APPLIED PHYSICS, AMERICAN INSTITUTE OF PHYSICS, US, vol. 111, no. 7, 6 March 2012 (2012-03-06) , pages 7C312-7C312, XP012159120, ISSN: 0021-8979, DOI: 10.1063/1.3676243 [retrieved on 2012-03-06]<br>* the whole document * | 1-13 | TECHNICAL FIELDS SEARCHED (IPC)<br><br>G01J<br>B82Y |

-/--

The present search report has been drawn up for all claims

| Place of search | Date of completion of the search | Examiner |
|---|---|---|
| Berlin | 23 February 2015 | Sagol, Bülent Erol |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 14 18 0354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HÖVEL S ET AL: "Electrical detection of photoinduced spins both at room temperature and in remanence", APPLIED PHYSICS LETTERS, AMERICAN INSTITUTE OF PHYSICS, US, vol. 92, no. 24, 17 June 2008 (2008-06-17) , pages 242102-242102, XP012107568, ISSN: 0003-6951, DOI: 10.1063/1.2948856 * the whole document * | 1-13 | |
| A | US 2011/026296 A1 (ZAYETS VADYM [JP] ET AL) 3 February 2011 (2011-02-03) * the whole document * | 1,5-13 | |
| A | EP 2 190 022 A1 (HITACHI LTD [JP]) 26 May 2010 (2010-05-26) * the whole document * | 1,9-13 | |

TECHNICAL FIELDS
SEARCHED (IPC)

The present search report has been drawn up for all claims

| Place of search | Date of completion of the search | Examiner |
|---|---|---|
| Berlin | 23 February 2015 | Sagol, Bülent Erol |

EPO FORM 1503 03.82 (P04C01)

**EP 2 982 950 A1**

## ANNEX TO THE EUROPEAN SEARCH REPORT
## ON EUROPEAN PATENT APPLICATION NO.

EP 14 18 0354

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2015

| Patent document cited in search report | Publication date | Patent family member(s) | Publication date |
|---|---|---|---|
| US 2011001473 A1 | 06-01-2011 | US 2011001473 A1<br>WO 2009102577 A1 | 06-01-2011<br>20-08-2009 |
| EP 2680321 A2 | 01-01-2014 | CN 101919068 A<br>EP 2232589 A1<br>EP 2680321 A2<br>JP 5524859 B2<br>JP 2011507303 A<br>US 2011079706 A1<br>WO 2009078809 A1 | 15-12-2010<br>29-09-2010<br>01-01-2014<br>18-06-2014<br>03-03-2011<br>07-04-2011<br>25-06-2009 |
| JP 2005011907 A | 13-01-2005 | JP 4297739 B2<br>JP 2005011907 A | 15-07-2009<br>13-01-2005 |
| US 2011026296 A1 | 03-02-2011 | JP 4986180 B2<br>JP 2011035015 A<br>US 2011026296 A1 | 25-07-2012<br>17-02-2011<br>03-02-2011 |
| EP 2190022 A1 | 26-05-2010 | CN 101738374 A<br>EP 2190022 A1<br>JP 2010122211 A<br>KR 20100056960 A<br>TW 201022650 A<br>US 2010123133 A1 | 16-06-2010<br>26-05-2010<br>03-06-2010<br>28-05-2010<br>16-06-2010<br>20-05-2010 |

EPO FORM P0459

For more details about this annex : see Official Journal of the European Patent Office, No. 12/82